# EUROPÄISCHE PATENTANMELDUNG

(11) **EP 2 157 348 A1**
(43) Veröffentlichungstag der Anmeldung: **24.02.2010**
(21) Anmeldenummer: 09010648.5
(22) Anmeldetag: 19.08.2009
(51) Int. Cl.: F16K 31/163, F16K 31/528

(54) **Bistabile Betätigungsvorrichtung für ein Ventil**

(30) Priorität: 20.08.2008 DE 102008038439
(71) Anmelder: KNORR-BREMSE Systeme für Nutzfahrzeuge GmbH, 80809 München (DE)
(72) Erfinder: Vollmer, Otto, 80689 München (DE); Mederer, Martin, 80797 München (DE)
(74) Vertreter: Mattusch, Gundula

(57) **Zusammenfassung**

Eine Betätigungsvorrichtung (12) für ein Ventil (11) mit mindestens zwei selbsthaltenden Betriebszuständen (20,22) umfasst eine Selbsthaltevorrichtung (92) mit einem drehbar gelagerten Rastierteil (32) und einem Verdrehteil (30). Das Verdrehteil (30) ist dazu vorgesehen, das Rastierteil (32) während eines Betätigungsvorgangs zu drehen. Eine Fixierung eines Verschlussteils (14) erfolgt mittels eines Fixierteils (34), das weder ein Teil des Rastierteils (32) noch ein Teil des Verschlussteils (14) ist.

In einem Betätigungsverfahren für ein Ventil (11), das ein Verschlussteil (14) umfasst, der in mindestens zwei selbsthaltenden Betriebszuständen (20,22) angeordnet sein kann, wird zunächst ein in einem Ventilgehäuse (36) gelagertes Verdrehteil (30) axial verschoben. Mittels Fortführung der axialen Verschiebung wird das Verdrehteil mit einem Rastierteil (32) verkoppelt. Mittels der Art der Lagerung (62) im Ventilgehäuse (36) und Fortführung der Axialverschiebung werden das Verdrehteil (30) und das damit verkoppelten Rastierteils (32) gedreht. Mittels des Drehens des Rastierteils (32) wird eine Position eines Fixierteils (30) so verändert, dass es eine Bewegung des Verschlussteils (14) solange verhindert, bis das Fixierteil (34) mittels eines weiteren Betätigungsvorgangs wieder aus dieser Position entfernt wird. Das Fixierteil (34) ist weder ein Teil des Rastierteils (32) noch ein Teil des Verschlussteils (14).

## Beschreibung

Die Erfindung betrifft eine Betätigungsvorrichtung für ein Ventil mit mindestens zwei selbsthaltenden Betriebszuständen, wobei die Betätigungsvorrichtung eine Selbsthaltevorrichtung mit einem drehbar gelagerten Rastierteil und einem Verdrehteil umfasst, das dazu vorgesehen ist, das Rastierteil während eines Betätigungsvorgangs zu drehen.

Die Erfindung betrifft weiterhin ein Betätigungsverfahren für ein Ventil, das ein Verschlussteil umfasst, das in mindestens zwei selbsthaltenden Betriebszuständen angeordnet sein kann, wobei das Betätigungsverfahren folgende Schritte umfasst: Axiales Verschieben eines in einem Ventilgehäuse gelagerten Verdrehteils; Verkoppeln des Verdrehteils mit einem Rastierteil mittels Fortführung der axialen Verschiebung und Drehen des Verdrehteils und des damit verkoppelten Rastierteils mittels der Art der Lagerung im Ventilgehäuse und Fortführung der Axialverschiebung, wobei mittels des Drehens des Rastierteils eine Position eines Fixierteils so verändert wird, dass es eine Bewegung des Verschlussteils solange verhindert, bis das Fixierteil mittels eines weiteren Betätigungsvorgangs wieder aus dieser Position entfernt wird.

In einigen Anwendungsbereichen - beispielsweise bei Ventilen für Feststellbremsen - ist ein Ventil mit mindestens zwei selbsthaltenden Betriebszuständen erwünscht. Dabei soll das Ventil auch ohne Anliegen eines Steuersignals in seinem zuletzt eingestellten Betriebszustand solange verharren, bis es ein erneutes Steuersignal zum Verändern des Betriebszustands erhält. Ein solches Ventil wird als bistabiles Ventil bezeichnet, wenn es genau zwei selbsthaltende Betriebszustände aufweist. Vom selben Anmelder wurde eine deutsche Patentanmeldung für ein bistabiles Ventil eingereicht, in dem die bistabile Fixierung der Selbsthaltevorrichtung mittels Einbuchtungen im Bereich von Rastpositionen erfolgt, wobei die Einbuchtungen an dem Tiefrastelement angeordnet sind. Während betätigungsfreier Zeiten werden Druckkräfte, die von einem Anschlussflansch des Tiefrastelements ausgehen, mittels der Einbuchtungen voll auf eine feststehende Raste übertragen. Aufgrund der hohen Kräfte ist der Platzbedarf, Materialbedarf, Herstellungsaufwand und das Abnutzungsrisiko an den Einbuchtungen und der feststehenden Raste unerwünscht hoch.

Der Erfindung liegt die Aufgabe zugrunde, für ein Ventil eine gattungsgemäße Betätigungsvorrichtung bereitzustellen, deren Selbsthaltevorrichtung mit einem geringeren Platzverbrauch, Materialverbrauch, Herstellungsaufwand und Abnutzungsrisiko realisiert werden kann.

Diese Aufgabe wird mit den Merkmalen der unabhängigen Ansprüche gelöst. Vorteilhafte Ausgestaltungen und Weiterbildungen der Erfindungen ergeben sich aus den abhängigen Ansprüchen.

Die vorliegende Erfindung baut auf einer gattungsgemäßen Betätigungsvorrichtung dadurch auf, dass eine Fixierung eines Verschlussteils mittels eines Fixierteils erfolgt, das weder Teil des Rastierteils noch ein Teil des Verschlussteils ist. Mit einem solchen Fixierteil kann eine Selbsthaltevorrichtung aufgebaut werden, welche eine Haltekraft aufweist, die wesentlich größer ist, als eine Steuerkraft zum Betätigen der Selbsthaltevorrichtung. In dem in den Figuren dargestellten Ausführungsbeispiel kann das Fixierteil eine Sperrkugel sein. Das Fixierteil wird während eines Betätigungsvorgangs mit geringem Kraftaufwand - mittels eines Verdrehteils, dessen Kulissenlagerung, einer Kupplungsvorrichtung und eines Rastierteils - in eine Sperrposition bewegt bzw. aus ihr herausbewegt. Der Kraftaufwand dafür kann gering sein im Verhältnis zu einer Kraft, die der Steuerkolben für eine axiale Schubbewegung des Schiebers aufwenden muss oder aufwenden kann. Aufgrund der verhältnismäßig geringen Kräfte, die an dem Verdrehteil, dessen Kulissenlagerung, der Kupplungsvorrichtung und dem Rastierteil auftreten, können diese Teile mit einem im Verhältnis geringeren Platzverbrauch, Materialverbrauch, Herstellungsaufwand und Abnutzungsrisiko realisiert werden als bei einer Selbsthaltevorrichtung wie sie eingangs vergleichshalber beschrieben wurde.

Vorzugsweise ist eine Drehbeweglichkeit des Verdrehteils mittels einer Kulissenführung festgelegt.

Vorzugsweise umfasst das Verdrehteil eine Kulisse der Kulissenführung.

Besonders bevorzugt ist es, wenn das Verdrehteil in einem Ventilgehäuse angeordnet ist, wobei das Ventilgehäuse eine Kulisse der Kulissenführung umfasst.

Ebenfalls bevorzugt ist es, wenn das Verdrehteil ein Führungsteil der Kulissenführung umfasst.

Auch kann es vorteilhaft sein, wenn das Verdrehteil in einem Ventilgehäuse angeordnet ist, wobei das Ventilgehäuse ein Führungsteil der Kulissenführung umfasst.

Auch kann vorgesehen sein, dass das Führungsteil der Kulissenführung eine Kugel ist.

Im Übrigen kann das Verdrehteil auf einem beweglichen Steuerkolben beweglich gelagert sein.

Darüber hinaus kann auf dem Verdrehteil ein Verschlussteil beweglich gelagert sein.

Schließlich ist es vorteilhaft, wenn das Rastierteil während des Betätigungsvorgangs zum Zwecke der Betätigung im Wesentlichen nicht axial verschoben wird.

Die Erfindung baut dadurch auf dem gattungsgemäßen Verfahren auf, dass das Fixierteil weder ein Teil des Rastierteils noch ein Teil des Verschlussteils ist.

Typischerweise weist das Ventil ein durchflussbeeinflussendes Teil (beispielsweise einen Schieber) auf, das zwischen mindestens einem Paar von Fluidanschlüssen einen Strömungswiderstand bereitstellt, dessen Höhe von der jeweiligen Betätigungsstellung abhängt. Zur Vereinfachung wird das durchflussbeeinflussende Teil im Folgenden als Verschlussteil bezeichnet. Nur in einer besonders bevorzugten Ausführungsform wirkt das Verschlussteil in einer der Betätigungsstellungen durchflusssperrend, so dass der Strömungswiderstand dann unendlich groß ist. Das Verschlussteil ist typischerweise in einem Schublager gelagert, wobei die Schubrichtung vorzugsweise parallel oder in Richtung zu einer Verdrehachse des Verdrehteils zeigt.

Die Erfindung wird nun mit Bezug auf die begleitenden Zeichnungen anhand besonders bevorzugter Ausführungsformen beispielhaft erläutert.

Es zeigen:
- Figur 1: eine schematische, nicht maßstäbliche Ansicht eines Schnittes entlang einer Hauptachse eines erfindungsgemäßen Ventils in einer ersten Schaltstellung (oberhalb der Mittelachse) sowie in einer zweiten Schaltstellung (unterhalb der Mittelachse);
- Figur 2: eine schematische, nicht maßstäbliche Seitenansicht einer Kupplungsvorrichtung des erfindungsgemäßen Ventils;
- Figur 3: eine schematische, nicht maßstäbliche Ansicht eines zur Hauptachse querverlaufenden Schnittes A-A durch einen Eingriffsbereich der Selbsthaltevorrichtung in der ersten Schaltstellung;
- Figur 4: eine schematische, nicht maßstäbliche Ansicht eines zur Hauptachse querverlaufenden Schnittes B-B durch einen Eingriffsbereich der Selbsthaltevorrichtung in der zweiten Schaltstellung;
- Figur 5: eine schematische, nicht maßstäbliche Ansicht eines querver-laufenden Schnitt C-C durch einen Eingriffsbereich einer Aus-führungsform der Erfindung mit einer zusätzliche Fixierung; und
- Figur 6: eine schematische nicht maßstäbliche Ansicht eines Schnittes durch ein konventionelles Ventil.

In den folgenden Zeichnungen bezeichnen gleiche Bezugszeichen gleiche oder gleichartige Teile. Somit werden in der Beschreibung der Figuren jeweils Beschreibungsteile einer oder mehrerer anderer Figuren implizit mitgenutzt.

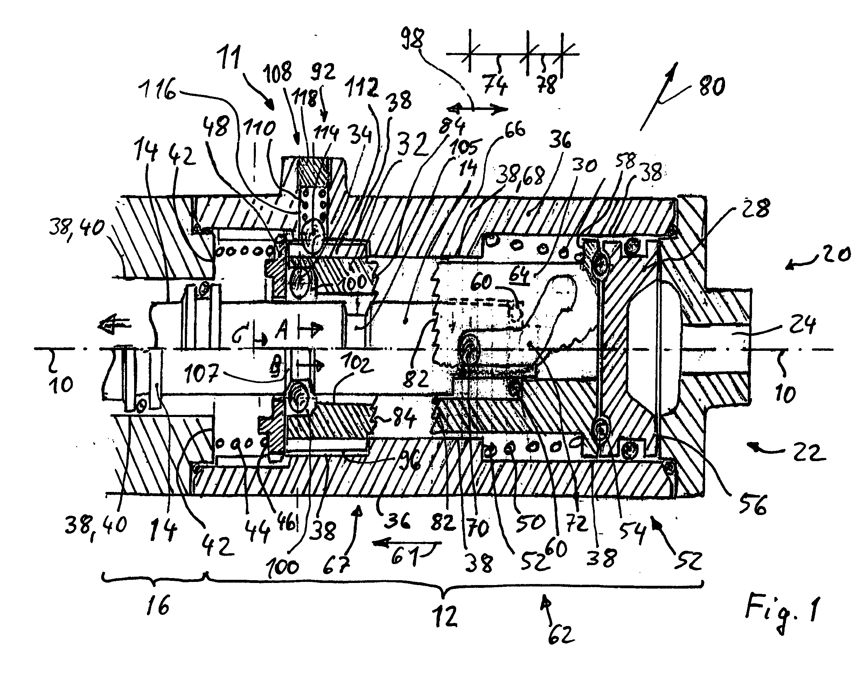

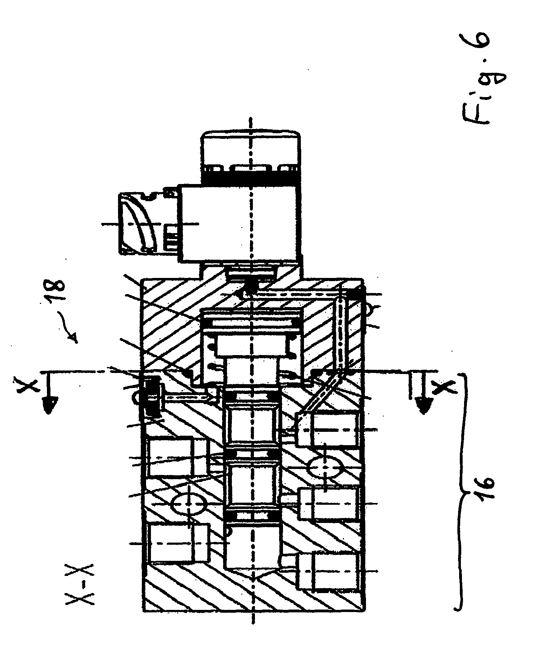

Fig. 1 zeigt einen Schnitt entlang einer Hauptachse 10 eines erfindungsgemäßen Ventils 11 am Beispiel eines Schieberventils 11. Auf der linken Seite ist ein Stellglied 16 des Schiebers 14 dargestellt, der beispielsweise so aufgebaut sein kann wie das in Fig. 6 links vom Schnitt X-X gezeigte Stellglied 16 eines konventionellen Liftachsventils 18. Die rechte Seite zeigt die erfindungsgemäße Betätigungsvorrichtung 12 des Ventils 11. Oberhalb der Hauptachse 10 ist das Ventil 11 in einer ersten (rechten) Schaltstellung 20 gezeigt, in der ein Steueranschluss 24 drucklos ist. Unterhalb der Hauptachse 10 ist das Ventil 11 in einer zweiten (linken) Schaltstellung 22 gezeigt. Das Ventil 11 kann - nach einem Toggle-Prinzip - von der ersten Schaltstellung 20 in die zweite Schaltstellung 22 und umgekehrt geschaltet werden. Es umfasst neben dem Schieber 14 folgende vier mechanisch in Serie geschaltete Betätigungskomponenten: einen Steuerkolben 28, ein Verdrehteil 30, ein Rastierteil 32 und ein Fixierteil 34. Typischerweise ist jede dieser Ventilkomponenten 14, 28, 30, 32, 34 von einem Teil eines Ventilgehäuses 36 umgeben. Typischerweise ist eine Innenwand 38 des Gehäuses 36 so geformt, dass es zugleich auch für eine oder mehrere der Ventilkomponenten 14, 28, 30, 32, 34 die Funktion einer Führungshülse erfüllt. Die Führungshülse 40 des Schiebers 14 weist eine Schulter 42 auf, auf der sich eine erste Druckfeder 44 abstützt, die eine Flanke 46 eines Halterings 48 von der Schulter 42 abspreizt. In der ersten Schaltstellung 20 befinden sich die Ventilkomponenten 14, 28, 30, 32, 34 in ihrer Ausgangsstellung. Die zweite Druckfeder 50 ist dazu vorgesehen, das Verdrehteil 30 während seiner Ruhestellung von einem Vorsprung 52, der an einer Innenwand des Gehäuses 36 angeordnet ist, in eine von dem Rastierteil 32 abgewandte Richtung zu spreizen, so dass das Verdrehteil 30 gegen einen Kugelkranz 54 eines ersten Kugellagers drückt, und damit mittelbar auch gegen den Steuerkolben 28. Infolgedessen wird der Steuerkolben 28 in seiner Ruhestellung gegen eine innere Schulter 56 des Gehäuses 36 geschoben.

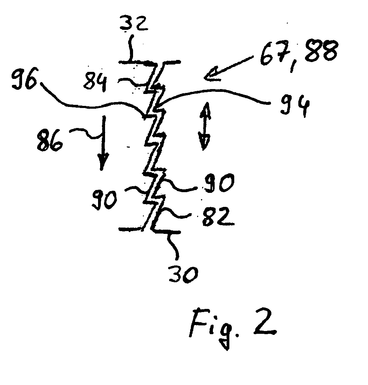

Beim Aufbau eines Steuerdrucks am Steueranschluss 24 setzt der Steuerkolben 28 den Druck in eine Schubkraft um, die er über den Kugelkranz 54 des ersten Kugellagers an das Verdrehteil 30 weiterleitet. Das Verdrehteil 30 schiebt den Schieber 14 mittels eines zweiten Kugellagers 60 in einer axialen Hubrichtung 61 in die zweite Schaltstellung 22. Dabei presst das Verdrehteil 30 mittels seiner Flanke 58 die zweite Druckfeder 50 so weit zusammen, dass sich das Verdrehteil 30 und das Rastierteil 32 an ihren Kupplungsflächen 82, 84 berühren. Das Verdrehteil 30 übermittelt mittels des Rastierteils 32 die Schubkraft von einer ersten mechanischen Schnittstelle 54 großteils auf eine zweite mechanische Schnittstelle 60. Ein übriger Teil der Schubkraft, die von der ersten mechanischen Schnittstelle 54 ausgeht, wird mittels eines Kurvengetriebes 62, das in einem Bereich einer Umfangsfläche 64 des Verdrehteils 30 angeordnet ist, in ein Drehmoment des Verdrehteils 30 umgesetzt, wodurch das Verdrehteil 30 gedreht wird. Das Kurvengetriebe 62 besteht beispielsweise aus einem in einer Wand 66 der Führungshülse 68 des Verdrehteils 30 zwar formschlüssig - jedoch beweglich - angeordneten Kugel 70 und aus einer in der äußeren Umfangsfläche 64 des Verdrehteils 30 angeordneten Kulisse 72. Zusätzlich oder alternativ ist auch eine umgekehrte Zuordnung von Kugel 70 und Kulisse 72 möglich. Vorzugsweise verläuft die Kulisse 72 in einem ersten Hubbereich 74 in der Hubrichtung 61 und in einem zweiten Hubbereich 78 in einer Richtung 80, die zwar nicht senkrecht, aber schräg zur Hubrichtung 61 gerichtet ist. Der erste Hubbereich 74 dient dazu, das Verdrehteil 30 durch Bewegung in Hubrichtung 61 so mit dem Rastierteil 32 in Berührung zu bringen, dass sich die Kupplungsflächen 82, 84 von Verdrehteil 30 und Rastierteil 32 berühren. Der zweite Hubbereich 78 dient dazu, das Rastierteil 32 gleichzeitig mit einer Fortführung der Bewegung in Hubrichtung 61 zusätzlich auch zu drehen. Dazu ist zwischen dem Verdrehteil 30 und dem Rastierteil 32 eine Kupplungsvorrichtung 67 (vorzugsweise je eine Kupplungsfläche 82, 84) vorgesehen, die zwischen dem Verdrehteil 30 und dem Rastierteil 32 in einer Drehrichtung 86 (siehe Fig. 2) eine ausreichend große Scherkraft bzw. ein ausreichend großes Drehmoment vermitteln kann. Nach Abbau des Steuerdrucks am Steueranschluss 24 befinden sich die Ventilkomponenten 14, 28, 30, 32, 34 in der unterhalb der Hauptachse 10 gezeigten Schaltstellung 22.

Die beiden Kupplungsflächen 82, 84 bleiben für den ganzen oder zumindest für einen Großteil des Hubbereichs 74 in Berührung, während sich das Verdrehteil 30 in die Ruhestellung zurückzieht, weil es von der zweiten Druckfeder 50 in die Ruhestellung geschoben wird. Wenn in dieser Drehrichtung (Freilaufrichtung) der Standwiderstand des Rastierteils 32 geringer wäre als ein Reibungsmoment zwischen den beiden Kupplungsflächen 82, 84, würde das Rastierteil 32 beim Zurückziehen und Zurückdrehen des Verdrehteils 30 das Rastierteil 32 ebenfalls zurückdrehen. Um dies zu verhindern, kann zwischen Rastierteil 32 und Gehäuse 36 oder zwischen dem Verdrehteil 30 und dem Rastierteil 32 eine Sperrklinkenfunktion oder ein Freilauf 88 (Einwegkupplung) vorgesehen sein. Die Funktion eines Freilaufs 88 kann durch eine wie in Fig. 2 gezeigte sägezahnartigen Verzahnung 90 mindestens einer der beiden Kupplungsflächen 82, 84 realisiert werden. Damit können sich die steilen Flanken der Zähne 94, 96 von beiden Kupplungsflächen 82, 84 beim Kupplungsvorgang nichtabrutschend hintergreifen und bei Betätigung eine Kraft in einer Tangentialrichtung und damit ein Drehmoment übertragen. In der Freilaufdrehrichtung sind die sich berührenden Zahnflanken wesentlich flacher, so dass die flachen Zahnflanken aneinander abrutschen. Beim Gleiten der flachen Zahnflanken wird das Rastierteil 32 entgegen der Federkraft der ersten Druckfeder 44 kontinuierlich etwas angehoben, bis ein Umfangswinkel einer vollen Zahnlänge durchlaufen wurde, so dass die Zähne 94, 96 um eine volle Zahnlänge versetzt sind und wieder tief (vorzugsweise formschlüssig) ineinandergreifen können. Damit rutschen die Zähne 96 des Rastierteils 32 wieder in die Zähne 94 des Verdrehelements 30 zurück.

Um sicher zu sein, dass es - beispielsweise nach einer unbeabsichtigten Erhöhung eines Reibungskoeffizienten infolge einer Aufrauhung oder eines Schmiermittelmangels - nicht trotzdem passiert, dass die Berührung der flachen Zahnflanken eine Standreibung des Rastierteils 32 überwindet, umfasst das Ventil 12 vorzugsweise eine Fixierungsvorrichtung 108, die zumindest in den Ruhepositionen (hier α = 0°, 45°, 90°, 135°, 180°, 225°, 270°, 315°) ein Haltedrehmoment erzeugt, dass zumindest in Freilaufrichtung 87 (des Verdrehteils) einer Drehbewegung des Rastierteils mit einer definierten Stand-Drehmomenthöhe entgegenwirkt. Es ist also wichtig, dass das Standmoment der Lagerung des Rastierteils 20 zumindest in den gewünschten Drehwinkelstellungen größer ist, als ein Mitnahmemoment des Freilaufs 88 in Freilaufrichtung 87. Dies wird mit der Fixierungsvorrichtung 108 durch Bevorzugung bestimmter Drehwinkel α (hier 0°, 45°, 90°, 135°, 180°, 225°, 270°, 315°) des Verdrehteils 18 erreicht. Aufgrund einer dellenartigen Ausformung 112 einer Rastscheibe 32 wird eine dritte Druckfeder 110 an solchen Drehwinkeln α etwas entspannt, in denen eine Kugel 114, die mittels einer dritten Druckfeder 110 vorgespannt ist, teilweise in die dellenartige Ausformung 112 einrücken kann und damit einen energetisch günstigeren, d.h. entspannteren, Zustand einnehmen kann. Die Rastscheibe 32 kann mit dem Rastierteil 32 eine mechanisch fest verbundene Baueinheit 32 bilden. Typischerweise sind die dritte Druckfeder 110 und die vorgespannte Kugel 114 in einer Bohrung 116 des Gehäuses 36 unter einer Schraube 118 fixiert.

Der Schieber 14 kann ohne Anliegen eines fluidischen Drucks auf der Betätigungsseite jede der beiden unterschiedlichen Schaltstellungen 20, 22 beibehalten, die sich in der jeweiligen axialen Stellung des Schiebers 14 unterscheiden. In Axialrichtung 98 unterschiedliche Ruhestellungen 20, 22 des Schiebers 14 ergeben sich dadurch, dass der Schieber 14 in Ruhestellung von einem (in der Figur nicht dargestellten) Rückholmechanismus - soweit möglich - in die erste Schaltstellung 20, d.h. hier in Richtung des Steueranschlusses 24 gezogen wird. Beispielsweise das Stellglied 16 eine Rückholstellfeder umfassten. Ein Rückholen in die erste Schaltstellung 20 erfolgt aber nur, wenn das Fixierteil 34 (hier eine Sperrkugel 34) ausreichend tief in eine Nut 100 eintauchen kann, die auf einer Innenumfangsfläche 102 des Rastierteils 32 angeordnet ist. Typischerweise sind mehrere der Fixierteile 34 über einen Umfang um die Hauptachse 10 verteilt angeordnet, und zwar vorzugsweise gleichbeabstandet.

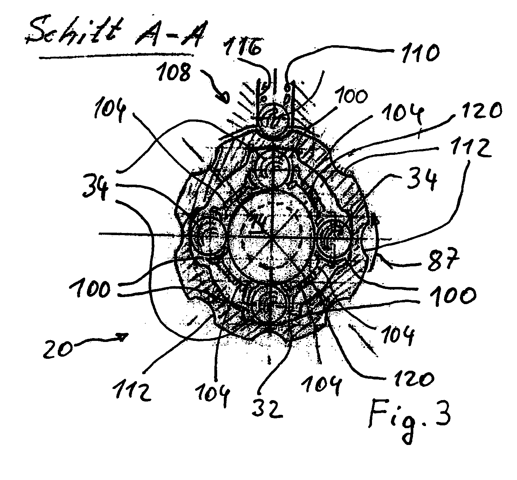

Fig. 3 zeigt wie in der ersten Schaltstellung 20 einer ersten Drehstellung 0° mehrere auf einen Innenumfang des Rastierteils 32 verteilt angeordnete Fixierteile 34 in Nuten 100 des Rastierteils 32 eingetaucht sind. Jeweils benachbarte Fixierteile 34 werden mittels druckfederartiger Abstandshalter 104 auf Abstand gehalten.

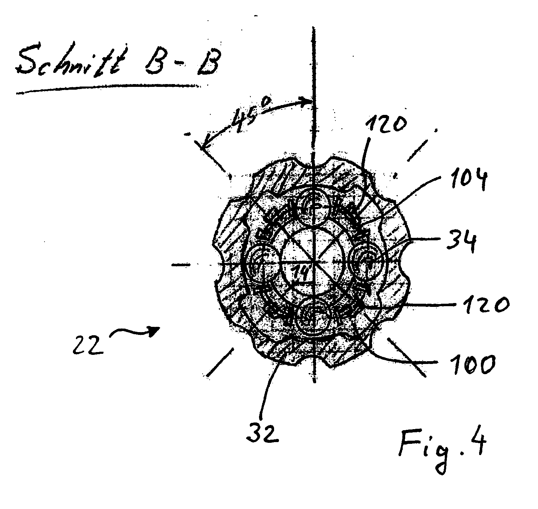

Im Vergleich dazu zeigt Fig. 4, wie in einer zweiten Drehstellung 45° (zweiten Schaltstellung 22) dieselben Fixierteile 34 nicht in Nuten 100 des Rastierteils 32 eintauchen, weil sich in dem Rastierteil 32 an der entsprechenden Drehwinkelstellung α keine Nut 100 befindet. In diesem Fall können - infolge Platzmangels - weder die Abstandshalter 104 noch eine in einer Haltevertiefung 105 des Schiebers 14 angeordnete Flanke 107 das Fixierteil 34 aus der Haltevertiefung 105 herausbewegen.

Sobald am Steueranschluss 24 wieder ein ausreichender Steuerdruck angelegt wird, ist der Ablauf im Prinzip so wie zu Fig. 1 beschrieben. Jede Drehwinkelstellung entspricht jeweils einer Schaltstellung 20, 22. Allerdings ist in dem Rastierteil 32 nur an jeder zweiten Drehwinkelstellung α eine Nut 100 angeordnet. Das Fixierteil 34 kann den Schieber 14 nur an denjenigen Drehwinkelstellungen α mittels seiner Haltevertiefung 105 fixieren, an denen in dem Rastierteil 32 keine Nut 100 angeordnet ist. Wird der Steuerdruck angelegt und befindet sich das Rastierteil 32 in einer Drehwinkelstellung α, in welcher im Bereich des Fixierteils 34 keine Nut 100 angeordnet ist, so wird der Schieber 14 mittels des Steuerkolbens 28, der mechanischen Schnittstelle 54, des Verdrehteils 30 und der mechanischen Schnittstelle 60 in Hubrichtung 61 bewegt. Das Rastierteil 32 kann dabei nicht gedreht werden. Denn dies würde dazu führen, dass das Fixierteil 34 keinen Platz mehr hätte, weil sich die Nut 100 dann von ihm wegbewegen würde. Erst, wenn der Schieber 14 bereits so weit angehoben ist, dass die Haltevertiefung 105 unter dem Fixierteil 34 "angekommen" ist, hat das Fixierteil 34 eine Möglichkeit, teilweise in die Haltevertiefung 105 des Schiebers abzutauchen und damit dem Rastierteil 32 etwas auszuweichen. Das Rastierteil 32 kann sich dann aufgrund des vorbeschriebenen Wirkungsmechanismus drehen. Dies erfolgt erst dann, wenn der Schieber 14 angehoben ist. Gleiches gilt, wenn der Schieber 14 sich bereits in der angehobenen Position befindet und am Steueranschluss 24 ein Steuerdruck erneut angelegt wird.

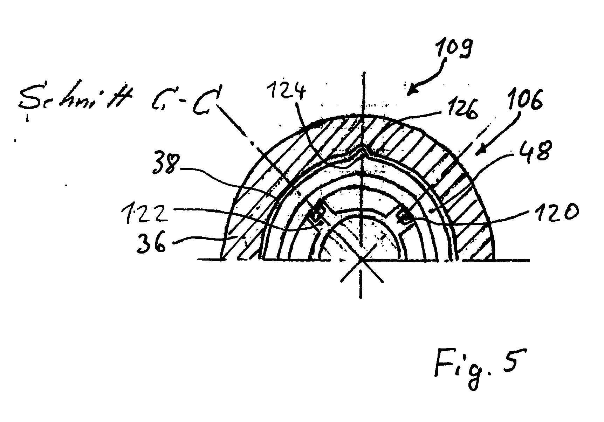

Fig. 5 zeigt einen querverlaufenden Schnitt C-C durch einen Eingriffsbereich einer Ausführungsform der Erfindung mit einer Verdrehsicherung 106 für den Kranz der Fixierteile 34. Die Sicherung gegen ein Verdrehen des Kranzes der Fixierteile 34 um die Hauptachse 10 kann beispielsweise mittels einer Verdrehsicherung der Abstandshalter 104 erfolgen. Dazu können die Abstandshalter 104 in dem in der Figur gezeigten Ausführungsbeispiel Nasen 120 aufweisen. Die Nasen 120 greifen in Aussparungen 122 ein, die im Haltering 48 angeordnet sind. Außerdem zeigt die Fig.5 eine Verdrehsicherung 109 für den Haltering 48. Dazu weist der Haltering 48 eine Nase 124 auf, die in eine Nut 126 eingreift, welche auf einer Innenwand 38 des Gehäuses 36 parallel zur Hauptachse 10 angeordnet ist. Damit wird ein Verdrehen des Halterings 48 auch dann verhindert, wenn der Haltering 48 entgegen dem Druck der ersten Druckfeder 44 angehoben wird.

Die Teile des Ventils 11 können so bemessen sein, dass der Schieber bei einem Anlegen eines Steuerdrucks in der Hubrichtung 61 letztlich weiter angehoben wird, als es zum Wechseln der bistabilen Schaltstellung 20, 22 erforderlich wäre. Diese Eigenschaft kann dazu verwendet werden, einen axialen Toleranzbereich für eine axiale Anordnung der Haltevertiefung 105 im Verhältnis zu einer axialen Lage der Fixierteile 34 zu vergrößern oder um zum Ende des Hubbereichs einen dritten nichtselbsthaltenden Betriebszustand des Stellglieds 16 vorzusehen.

Das fluidische Betätigungssignal ist typischerweise ein pneumatisches Druck- oder Unterdrucksignal oder ein hydraulisches Druck- oder Unterdrucksignal. Abweichend von den Ausführungsformen der Figuren können die zur Betätigung erforderlichen mechanischen Betätigungsimpulse auch durch nichtfluidische Krafteinwirkung, beispielsweise mittels eines Elektromagneten, erzeugt werden. Unabhängig davon kann bei entsprechender Umgestaltung der Angriffspunkte statt der ersten 44, zweiten 50 und/oder dritten 110 Druckfeder jeweils auch eine Zugfeder verwendet werden. Statt der Kugeln 70, 34 und/oder 114 können auch anders geformte Körper, beispielsweise zylinderförmige Körper, verwendet werden.

Sowohl die Anzahl der Kulissenführungen 62, als auch die Anzahl der Fixierteile 34 (somit auch die Anzahl der Haltevertiefungen 105) können beliebig sein. Eines der beiden Kugellager oder beide Kugellager können entfallen, wobei dann eine Abstützung über Planflächen der korrespondierenden Teile erfolgt. Um Reibkräfte beim Verdrehen klein zu halten, können zwischen den korrespondierenden Teilen unbeschichtete oder beschichtete Gleitscheiben, insbesondere aus Metall, Glas, Keramik oder Kunststoff, verwendet werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Hauptachse
- 11: Ventil, Schieberventil
- 12: Betätigungsvorrichtung
- 14: Verschlussteil; Schieber
- 16: Stellglied
- 18: konventionelles Liftachsventil
- 20: erste (rechte) Schaltstellung, Ruhestellung
- 22: zweite (linke) Schaltstellung, Ruhestellung
- 24: Steueranschluss
- 28: Steuerkolben; Betätigungskolben
- 30: Verdrehteil
- 32: Rastierteil; Rastscheibe
- 34: Fixierteil; Sperrkugel
- 36: Ventilgehäuse; Gehäuse
- 38: Innenwand des Ventilgehäuses 36
- 40: Führungshülse
- 42: Schulter
- 44: erste Druckfeder
- 46: Flanke des Halterings 48
- 48: Haltering
- 50: zweite Druckfeder
- 52: Vorsprung an Innenwand des Ventilgehäuses 36
- 54: erster Kugelkranz; erste mechanische Schnittstelle
- 56: innere Schulter
- 58: federseitige Flanke des Verdrehteils 30
- 60: zweites Kugellager; zweite mechanische Schnittstelle
- 61: Hubrichtung
- 62: Kurvengetriebe; Kulissenführung
- 64: Umfangsfläche des Verdrehteils 30
- 66: Wand der Führungshülse 68
- 67: Kupplungsvorrichtung
- 68: Führungshülse des Verdrehteils 30
- 70: Führungsteil oder Kugel der Kulissenführung 62
- 72: Kulisse
- 74: erster Hubbereich
- 78: zweiter Hubbereich
- 80: Richtung schräg zur Hubrichtung 76
- 82: Kupplungsfläche von Verdrehteil 30
- 84: Kupplungsfläche von Rastierteil 32
- 86: Drehrichtung
- 87: Freilaufrichtung
- 88: Freilauf
- 90: sägezahnartige Verzahnung
- 92: Selbsthaltevorrichtung
- 94: Zähne der Kupplungsfläche 82
- 96: Zähne der Kupplungsfläche 84
- 98: Axialrichtung
- 100: Nut
- 102: Innenumfangsfläche des Rastierteils 32
- 104: Abstandshalter
- 105: Haltevertiefung des Schiebers 14
- 106: Verdrehsicherung für Kranz der Fixierteile 34
- 107: Flanke in Haltevertiefung 105
- 108: Fixierung für Rastierteil 32
- 109: Verdrehsicherung für Haltering 48
- 110: dritte Druckfeder
- 112: dellenartige Ausformung
- 114: Kugel
- 116: Bohrung
- 118: Schraube
- 120: Nase eines Abstandshalters
- 122: Aussparung im Haltering 48
- 124: Nase am Haltering 48
- 126: Nut für Verdrehsicherung am Rastierteil 32

## Patentansprüche

1. Betätigungsvorrichtung (12) für ein Ventil (11) mit mindestens zwei selbsthaltenden Betriebszuständen (20,22), wobei die Betätigungsvorrichtung (12) eine Selbsthaltevorrichtung (92) mit einem drehbar gelagerten Rastierteil (32) und einem Verdrehteil (30) umfasst, das dazu vorgesehen ist, das Rastierteil (32) während eines Betätigungsvorgangs zu drehen, **dadurch gekennzeichnet, dass** eine Fixierung eines Verschlussteils (14) mittels eines Fixierteils (34) erfolgt, das weder ein Teil des Rastierteils (32) noch ein Teil des Verschlussteils (14) ist.

2. Betätigungsvorrichtung (12) gemäß Anspruch 1, **dadurch gekennzeichnet, dass** eine Drehbeweglichkeit (86) des Verdrehteils (30) mittels einer Kulissenführung (62) festgelegt ist.

3. Betätigungsvorrichtung (12) gemäß Anspruch 2, **dadurch gekennzeichnet, dass** das Verdrehteil (30) eine Kulisse (72) der Kulissenführung (62) umfasst.

4. Betätigungsvorrichtung (12) gemäß Ansprüche 2 oder 3, **dadurch gekennzeichnet, dass** das Verdrehteil (30) in einem Ventilgehäuse (36) angeordnet ist, das eine Kulisse (72) der Kulissenführung (62) umfasst.

5. Betätigungsvorrichtung (12) gemäß einem der Ansprüche 2 bis 4, **dadurch gekennzeichnet, dass** das Verdrehteil (30) ein Führungsteil (70) der Kulissenführung (62) umfasst.

6. Betätigungsvorrichtung (12) gemäß einem der Ansprüche 2 bis 5, **dadurch gekennzeichnet, dass** das Verdrehteil (30) in einem Ventilgehäuse (36) angeordnet ist, das ein Führungsteil (70) der Kulissenführung (72) umfasst.

7. Betätigungsvorrichtung (12) gemäß einem der Ansprüche 2 bis 6, **dadurch gekennzeichnet, dass** das Führungsteil (70) der Kulissenführung (72) eine Kugel (70) ist.

8. Betätigungsvorrichtung (12) gemäß einem der Ansprüche 2 bis 7, **dadurch gekennzeichnet, dass** das Verdrehteil (30) auf einem beweglichen Steuerkolben (28) beweglich gelagert ist.

9. Betätigungsvorrichtung (12) gemäß einem der Ansprüche 1 bis 8, **dadurch gekennzeichnet, dass** auf dem Verdrehteil (30) ein Verschlussteil (14) beweglich gelagert ist.

10. Betätigungsvorrichtung (12) gemäß einem der Ansprüche 1 bis 9, **dadurch gekennzeichnet, dass** das Rastierteil (32) während des Betätigungsvorgangs zum Zwecke der Betätigung im Wesentlichen nicht axial verschoben wird.

11. Betätigungsverfahren für ein Ventil (11), das ein Verschlussteil (14) umfasst, das in mindestens zwei selbsthaltenden Betriebszuständen (20,22) angeordnet sein kann, wobei das Betätigungsverfahren folgende Schritte umfasst:
- Axiales Verschieben eines in einem Ventilgehäuse (36) gelagerten Verdrehteils (30);
- Verkoppeln des Verdrehteils (30) mit einem Rastierteil (32) mittels Fortführung der axialen Verschiebung; und
- Drehen des Verdrehteils (30) und des damit verkoppelten Rastierteils (32) mittels der Art der Lagerung (62) im Ventilgehäuse (36) und Fortführung der Axialverschiebung, wobei mittels des Drehens des Rastierteils (32) eine Position eines Fixierteils (30) so verändert wird, dass es eine Bewegung des Verschlussteils (14) solange verhindert, bis das Fixierteil (34) mittels eines weiteren Betätigungsvorgangs wieder aus dieser Position entfernt wird, **dadurch gekennzeichnet, dass** das Fixierteil (34) weder ein Teil des Rastierteils (32) noch ein Teil des Verschlussteils (14) ist.
